# EUROPEAN PATENT APPLICATION

(11) **EP 4 807 925 A1**
(43) Date of publication of application: **16.09.2026**
(21) Application number: 25224113.8
(22) Date of filing: 16.12.2025
(51) Int. Cl.: H02G 1/10, H02G 9/02, B63B 35/04

(54) **EARLY WARNING AND HANDLING SYSTEM FOR SUBMARINE CABLE LAYING AND INVENTION METHOD THEREOF**

(30) Priority: 10.03.2025 CN 202510276449
(71) Applicant: SHANGHAI INVESTIGATION, DESIGN & RESEARCH INSTITUTE CO., LTD., Shanghai 200434 (CN)
(72) Inventor: YANG, Chao, SHANGHAI, 200434 (CN); HE, Xiaopeng, SHANGHAI, 200434 (CN); LAI, Li, SHANGHAI, 200434 (CN); YAO, Xinjian, SHANGHAI, 200434 (CN); SHEN, Yongqiang, SHANGHAI, 200434 (CN); LU, Senmao, SHANGHAI, 200434 (CN); GUO, Chengcheng, SHANGHAI, 200434 (CN); YANG, Jiakai, SHANGHAI, 200434 (CN); LUO, Wen, SHANGHAI, 200434 (CN)
(74) Representative: Groth & Co. KB

(57) **Abstract**

The present invention relates to the technical field of submarine cable laying and discloses a early warning and handling system for submarine cable laying and an application method thereof. The early warning and handling system for submarine cable laying is arranged on a submarine cable; one end of the submarine cable is connected to a cable reel at the stern of a submarine cable laying vessel, and the other end of the submarine cable is laid on the seabed; and the submarine cable is laid by a cable laying machine on the submarine cable laying vessel; wherein the system comprises weight components and buoyancy components alternately arranged at intervals on a part of the submarine cable located in the sea, and each weight component and each buoyancy component is connected to an alarm component. When sudden extreme sea conditions are encountered during submarine cable laying, the present invention can prevent the underwater submarine cable from drifting over a large range driven by ocean currents; meanwhile, it can provide early warning for nearby ships, offshore platforms and other facilities, thus avoiding scratches and damage to the submarine cable during the laying process.

## Description

### TECHNICAL FIELD

The present invention relates to the technical field of submarine cable laying, and more particularly, to an early warning and handling system for submarine cable laying and an invention method thereof.

### BACKGROUND ART

At present, with the gradual development of offshore wind power projects from shallow waters to deep and far seas, submarine cable laying is facing increasing challenges. Especially in deep and far sea areas, due to the increase in submarine cable length and the complexity of the marine environment, the construction difficulty and risks have increased accordingly. If extreme sea conditions are encountered during the construction process, it may face the dual tests of offshore construction safety and submarine cable construction quality.

Currently, when severe weather and sea conditions are encountered during submarine cable laying, most constructors will choose to activate the Dynamic Positioning System (DP) for navigation enable and the cable laying machine to automatically release the cable during the pulling process. In actual operation, the submarine cable will drift over a large range driven by ocean currents, which can easily lead to increased local stress on the submarine cable, resulting in damage to the fiber core or even breakage. At the same time, the submarine cable has the risk of scraping with ships, anchor cables, offshore platforms and other facilities, which will cause damage to the submarine cable. When the cable release length of the submarine cable is too long, it is also necessary to adopt the method of post-trenching and burying for the submarine cable, which will also increase the cost of submarine cable laying. If more severe short-term sea conditions are encountered, the submarine cable will be cut off, sealed with lead, and then thrown into the sea, and subsequent rush repairs will be organized, which will also have a huge impact on investment costs, and resulting in extremely serious losses. It can be seen that when severe sea conditions are encountered during the submarine cable laying process, the submarine cable is difficult to effectively protect, prone to damage, and causes economic losses.

### SUMMARY OF THE INVENTION

In view of this, the present invention provides an early warning and handling system for submarine cable laying and an application method thereof, so as to solve the problem that the submarine cables are prone to scraping or damage when sudden extreme sea conditions occur during the submarine cable laying process, resulting in economic losses.

In the first aspect, the present invention provides an early warning and handling system for submarine cable laying, which is disposed on a submarine cable; wherein one end of the submarine cable is connected to a cable reel at a stern of a submarine cable laying vessel, and the other end of the submarine cable is laid on the seabed; and the submarine cable is laid by a cable laying machine on the submarine cable laying vessel, wherein the system comprises weight components and buoyancy components alternately arranged at intervals on a part of the submarine cable located in the sea, and each group of the weight components and each group of the buoyancy components is connected to an alarm component.

### Beneficial Effects

The reasonable alternate arrangement of the weight components and buoyancy components ensures the stability of the submarine cable during the laying process, and avoids damage to the submarine cable caused by large-range drift or excessive bending under the influence of ocean currents when severe sea conditions are encountered. Moreover, each of the weight components and each of the buoyancy components is connected to an alarm component, which can provide real-time early warning prompts during the submarine cable laying process, reduce the risk of the submarine cable scraping with surrounding ships or offshore platforms, and reduce damage to the submarine cable.

In an optional embodiment, the system comprises one group of the weight components and two groups of the buoyancy components; wherein the alarm component connected to the weight component is located at the same height as the buoyancy components, and the alarm component connected to the buoyancy component floats on the sea surface.

### Beneficial Effects

The alarm component connected to the buoyancy component floats on the water surface, which can not only monitor the environment around the submarine cable in real time, but also improve the visibility of the alarm component under severe sea conditions or poor visibility at night; the alarm component connected to the weight component is located at the same height as the buoyancy components. When a ship passes above the submarine cable or there are reefs around the submarine cable, the alarm component can issue an alarm to play a warning role..

In an optional embodiment, each of the weight components comprises a plurality of weight blocks arranged at intervals along a extending direction of the submarine cable; wherein each of the weight blocks comprises a left weight ring and a right weight ring; one end of the left weight ring is hinged to one end of the right weight ring, and the other end of the left weight ring is fixedly connected to the other end of the right weight ring.

### Beneficial Effects

The arrangement of the weight blocks enables the submarine cable to withstand the force of ocean currents and provides downward sinking force for the submarine cable during the laying process, thus effectively reducing the drift risk of the submarine cable under complex sea conditions. The interval arrangement of the weight blocks optimizes the overall weight distribution of the weight component, enabling the weight component to maintain relative stability under extreme sea conditions.

In an optional embodiment, each of the weight blocks is provided with remote release devices; the remote release devices have a locked state in which the other end of the left weight ring is fixedly connected to the other end of the right weight ring, and an unlocked state in which the other end of the left weight ring is separated from the other end of the right weight ring by remote control.

### Beneficial Effects

After the severe sea conditions return to normal, the thrown submarine cable will be pulled and recovered by the cable laying machine. To ensure personnel safety and the quality of the submarine cable, the weight blocks can be released by remote control through the remote release devices, and the staff do not need to directly contact or manually remove the weight blocks, thus reducing the risk of manual operation.

In an optional embodiment, each of the buoyancy components comprises a plurality of buoyancy blocks arranged at intervals along a extending direction of the submarine cable; wherein each of the buoyancy blocks comprises a left buoyancy ring and a right buoyancy ring; one end of the left buoyancy ring is hinged to one end of the right buoyancy ring, and the other end of the left buoyancy ring is fixedly connected to the other end of the right buoyancy ring.

### Beneficial Effects

The buoyancy component provides uniform and continuous buoyancy support during the submarine cable laying process, effectively resists the downward pulling force of the weight component on the submarine cable, and maintains the stability of the submarine cable in seawater. The buoyancy component cooperates with the weight component to make the submarine cable present a wavy shape in the water, which can reduce collisions or damage caused by the instability of the submarine cable. The interval arrangement of the buoyancy blocks enables the buoyancy component to adjust the buoyancy according to actual needs under different sea conditions, adapt to the requirements of different submarine cable lengths and weights, and ensure that the buoyancy of the submarine cable is always in the optimal state.

In an optional embodiment, the alarm component comprises a housing, a distance sensing device and an alarm device; wherein the distance sensing device is disposed inside the housing, and the alarm device is disposed on the housing; the alarm device comprises a signal transmission device, a sound-emitting device and a light-emitting device; the distance sensing device is electrically connected to the signal transmission device, and the signal transmission device is electrically connected to the sound-emitting device and the light-emitting device.

### Beneficial Effects

Under severe sea conditions or at night, the signal transmission device and distance sensing device of the alarm component can monitor the dynamic changes around the submarine cable in real time, and generate corresponding control signals when a ship or other obstacles are detected to be approaching. The control signals can control the warning sound emitted by the sound-emitting device and the warning light emitted by the light-emitting device, improve the visibility and audibility of the alarm signal, timely warn nearby ships or offshore platforms, prevent collision and scraping with the submarine cable, and improve the safety during the submarine cable laying process.

In an optional embodiment, the system further comprises a connecting component; wherein the connecting component comprises an elastic connecting rope and a reel; one end of the elastic connecting rope is connected to the alarm component, the other end of the elastic connecting rope is connected to one of the weight components or one of the buoyancy components, and the reel is disposed on the elastic connecting rope.

### Beneficial Effects

The use of the elastic connecting rope provides the alarm component with dynamic adaptability, enabling the alarm component to automatically adjust the length according to the fluctuation of seawater and the displacement of the submarine cable, and avoiding excessive stretching or slackening of the alarm component caused by factors such as ocean waves and ocean currents. The arrangement of the reel enables the elastic connecting rope to be conveniently retracted and released during use, ensuring that the alarm component can always maintain effective connection with the buoyancy component or the weight component during the submarine cable laying process.

In an optional embodiment, the system further comprises a submarine cable bending limiter; the submarine cable bending limiter is disposed on a part of the submarine cable close to the cable laying machine.

### Beneficial Effects

The arrangement of the submarine cable bending limiter can accurately control the minimum bending radius of the submarine cable, ensure that the submarine cable always maintains a proper bending state during the entire laying process, and avoid structural damage or failure caused by excessive bending.

In the second aspect, the present invention also provides a method for using an early warning and handling system for submarine cable, which comprises the following steps:
when sea conditions suddenly change, alternately install buoyancy components and weight components on the submarine cable, connect alarm components when installing each group of the buoyancy components or each group of the weight components, and throw a section of the submarine cable with a length greater than its bending radius into the sea after installing each of the buoyancy components or each group of the weight components; and
install a submarine cable bending limiter on the part of the submarine cable close to the cable laying machine.

### Beneficial Effects

When extreme sea conditions are encountered during the submarine cable laying process, installing the buoyancy components and weight component and deploying the submarine cable can prevent the submarine cable from drifting over a large range due to the impact of waves or ocean currents. The alarm component can monitor whether ships or other obstacles are approaching around the submarine cable, and issue timely warnings through sound-emitting devices and light-emitting devices to avoid damage to the submarine cable. Meanwhile, the installation of submarine cable bending limiter prevents damage caused by excessive bending of the submarine cable.

In an optional embodiment, when the sea conditions return to normal, release the weight components through remote release devices, and then pull the submarine cable to wind it onto the cable reel through the cable laying machine.

### Beneficial Effects

After the sea conditions recover, the remote release devices can separate the weight component, improving the efficiency and safety of the submarine cable recovery process. Retrieving the submarine cable to the cable reel through the cable laying machine enables the efficient completion of the submarine cable recovery work.

### BRIEF DESCRIPTION OF THE DRAWINGS

To more clearly illustrate the technical solutions in the specific implementations of the present invention or in the prior art, the drawings that are needed for describing the specific implementations or the prior art are briefly introduced below. Apparently, the drawings described below only represent some implementations of the present invention, and those skilled in the art can obtain other drawings from these drawings without creative efforts.
FIG. 1 is a schematic diagram of an early warning and handling system for submarine cable laying according to an embodiment of the present invention;
FIG. 2 is a structural diagram of an alarm component according to an embodiment of the present invention;
FIG. 3 is a cross-sectional view of a weight block according to an embodiment of the present invention;
FIG. 4 is a top view of the weight block according to an embodiment of the present invention;
FIG. 5 is a bottom view of the weight block according to an embodiment of the present invention;
FIG. 6 is a cross-sectional view of a buoyancy block according to an embodiment of the present invention; and
FIG. 7 is a top view of the buoyancy block according to an embodiment of the present invention.

Reference numerals:
1. submarine cable;
2. submarine cable laying vessel;
3. cable reel;
4. seabed;
5. cable laying machine;
6. weight component; 61. weight block; 611. left weight ring; 612. right weight ring; 613. remote release device;
7. buoyancy component; 71. buoyancy block; 711. left buoyancy ring; 712. right buoyancy ring;
8. alarm component; 81. housing; 82. distance sensing device; 83. alarm device; 831. signal transmission device; 832. sound-emitting device; 833. light-emitting device;
9. sea surface;
10. connecting component; 101. elastic connecting rope; 102. reel;
11. submarine cable bending limiter;
12. connecting ring.

### DETAILED DESCRIPTION OF THE EMBODIMENTS

In order to make the purpose, technical solutions, and advantages in the present embodiment of the present invention more clear, the technical solutions in the embodiments of the present invention will be clearly and completely described below with reference to the accompanying drawings in the embodiments of the present invention, and it is obvious that the described embodiments are part of the embodiments of the present invention, but not all of the embodiments. Based on the embodiments in the present invention, all other embodiments obtained by those skilled in the art without creative work fall within the scope of protection of the present invention.

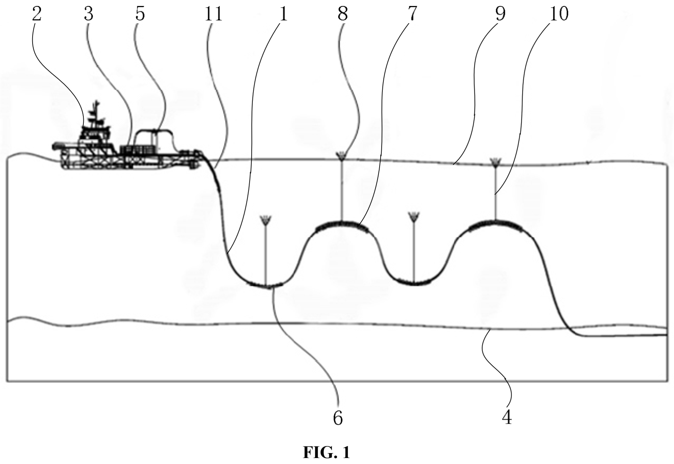

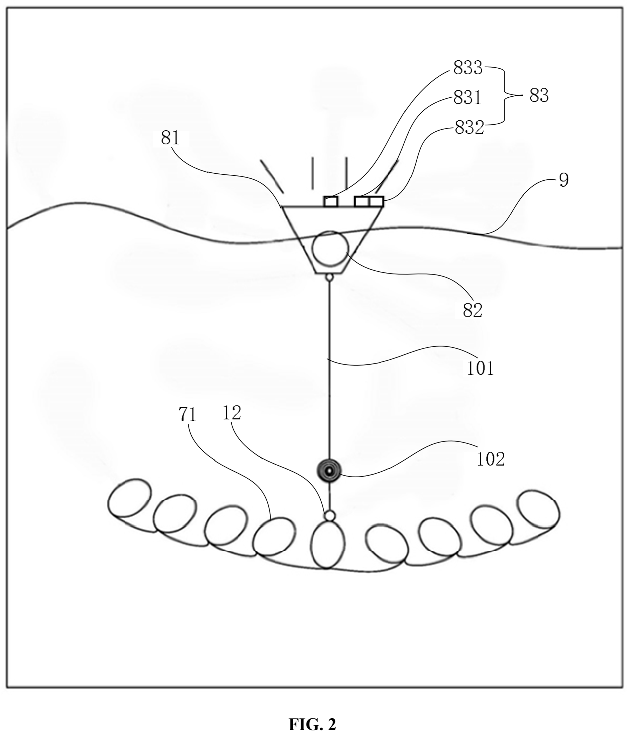

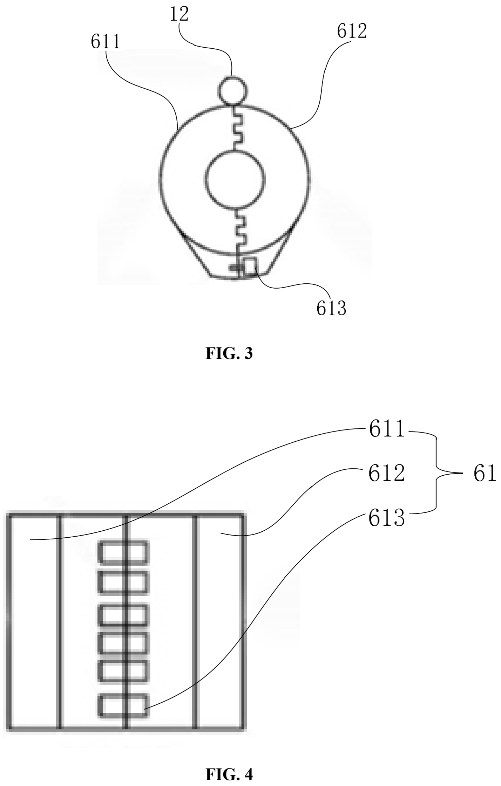

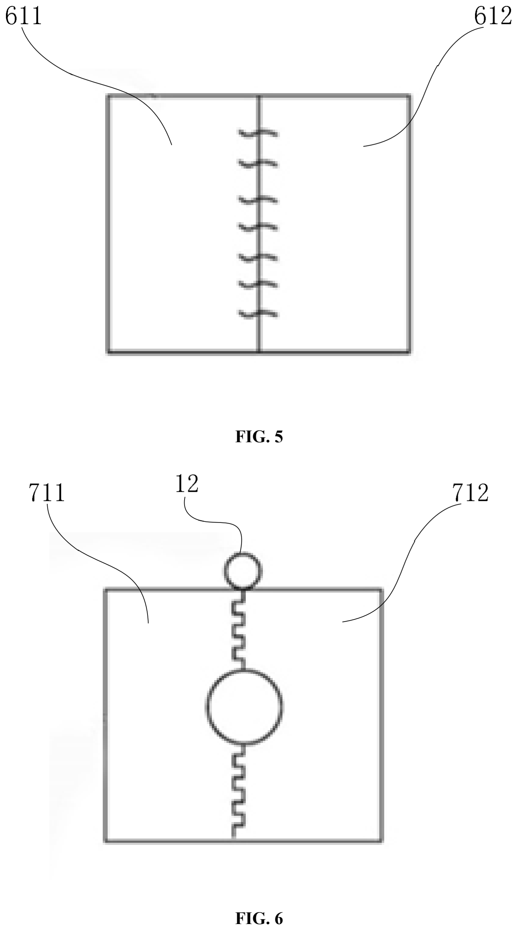

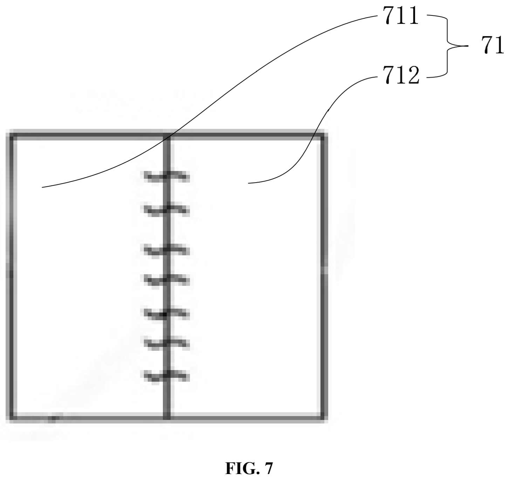

The embodiments of the present invention will be described below with reference to FIGS. 1 to 7.

According to the embodiment of the present invention, in the first aspect, an early warning and handling system for submarine cable laying is provided, which is disposed on a submarine cable 1; wherein one end of the submarine cable 1 is connected to a cable reel 3 at a stern of a submarine cable laying vessel 2, and the other end of the submarine cable 1 is laid on the seabed 4; and the submarine cable 1 is laid by a cable laying machine 5 on the submarine cable laying vessel 2. The early warning and processing system comprises weight components 6 and buoyancy components 7 alternately arranged at intervals on a part of the submarine cable 1 located in the sea, and each group of the weight components 6 and each group of the buoyancy components 7 is connected to an alarm component 8.

For submarine cable 1, long-length submarine cables of 220kV, 330kV or 500kV are selected and laid by the submarine cable laying vessel 2. Specifically, the cable reel 3 and the cable laying machine 5 are installed on the stern deck of the submarine cable 1 laying vessel; the submarine cable 1 is wound on the cable reel. When the submarine cable 1 laying work needs to be carried out, first, one end of the submarine cable 1 is laid into the seabed through the cable laying machine 5, and then the cable is laid gradually along with the traveling direction of the submarine cable laying vessel 2. The cable reel 3 is mainly responsible for winding and unwinding the submarine cable 1; the cable laying machine 5 is responsible for traction and controlling the cable releasing process of the submarine cable 1, and ensures that the submarine cable is placed accurately according to the predetermined path during the entire laying process.

Most of the submarine cable 1 being laid is located in the sea, and a part is located between the sea surface 9 and the cable reel 3. The weight components 6 and buoyancy components 7 are fixedly installed on the submarine cable located in the sea, and the weight components 6 and buoyancy components 7 are alternately arranged at intervals along the extending length direction of the submarine cable 1, such as alternating arrangement of one weight component 6 and one buoyancy component 7. The density of the weight component 6 is greater than that of seawater, and the weight component 6 provides downward gravity for the submarine cable 1. The density of the buoyancy component 7 is less than that of seawater, so as to ensure that it can provide sufficient buoyancy for the submarine cable 1. The submarine cable 1 maintains overall dynamic balance through the arrangement of the weight components 6 and buoyancy components 7; and through the alternate arrangement of the weight components 6 and buoyancy components 7, the weight components 6 exert downward pressure on the submarine cable 1, and the weight components 6 will drive a section of the submarine cable 1 to sink to form a wave trough section structure, while the buoyancy components 7 exert upward buoyancy on the submarine cable 1, and the buoyancy components 7 will drive a section of the submarine cable 1 to float upward to form a wave crest section structure, so that the submarine cable 1 presents an overall "wavy" structure. The weight components 6 and buoyancy components 7 are respectively connected to the alarm components 8, so that during the laying process of the submarine cable 1, the alarm components 8 can remind surrounding ships or offshore platforms in real time, and indicate the position of the submarine cable 1 through the alarm components 8, so as to avoid collision risks in time and reduce damage to the submarine cable 1.

By alternately arranging the weight components 6 and buoyancy components 7 on the submarine cable, the early warning and handling system for submarine cable laying ensures that the submarine cable 1 remains relatively stable underwater when encountering extreme sea conditions during laying, and prevents the submarine cable 1 from drifting due to waves and ocean currents. At the same time, the alarm components 8 connected to the weight components 6 and buoyancy components 7 can monitor the environment around the submarine cable 1 in real time; once a ship or offshore platform is found to be close to the submarine cable 1, the alarm components 8 can issue an alarm in time to avoid collision of the submarine cable 1 and reduce the risk of damage to the submarine cable 1.

In one embodiment, the early warning and handling system for submarine cable laying comprises one weight component 6 and two buoyancy components 7; wherein the alarm component 8 connected to the weight component 6 is located at the same height as the buoyancy components 7, and the alarm component 8 connected to each buoyancy component 7 floats on the sea surface 9.

In this embodiment, one group of the weight components 6 and two groups of the buoyancy components 7 are alternately arranged on the submarine cable 1; the submarine cable 1 forms a "wavy" structure of 1.5 cycles under the action of the weight component 6 and buoyancy components 7, where the position of the weight component 6 is the wave trough and the positions of the buoyancy components 7 are the wave crests. The alarm component 8 connected to the weight component 6 is suspended in the sea water at the same height as the wave crests formed by the buoyancy components 7; the alarm component 8 connected to the buoyancy components 7 floats on the sea surface. To ensure that the submarine cable 1 has a good dynamic buffering effect when suspended in water, the distance between the weight component 6 and the buoyancy components 7 is required to be greater than or equal to 2.5 times the minimum bending radius of the submarine cable 1, and the suspended length of the submarine cable 1 reaches "1.5 wave cycles".

The alarm components 8 connected to the buoyancy components float on the sea surface, which enhances the alarm effect of the alarm components 8; especially under severe weather or poor visibility, it can effectively remind surrounding ships and platforms to avoid damage to the submarine cable 1 caused by collision. The alarm components 8 on the weight components 6 are at the same height as the buoyancy components 7; when a ship passes above the submarine cable 1 or there are obstacles such as reefs, the alarm components can sense and issue an alarm in time to avoid collision or scraping of the submarine cable 1.

In other embodiments, a plurality of weight components 6 and a plurality of buoyancy components 7 can also be alternately arranged on the submarine cable 1, such as three weight components 6 and three buoyancy components 7 or four weight components 6 and four buoyancy components 7.

In other embodiments, the alarm components 8 connected to the weight components 6 can also float on the sea surface.

In one embodiment, each of the weight components 6 comprises a plurality of weight blocks 61 arranged at intervals along the extending direction of the submarine cable 1; wherein each weight block 61 comprises a left weight ring 611 and a right weight ring 612; one end of the left weight ring 611 is hinged to one end of the right weight ring 612, and the other end of the left weight ring 611 is fixedly connected to the other end of the right weight ring 612.

The weight component 6 comprises a plurality of weight blocks 61; the plurality of weight blocks 61 are installed at equal intervals along the extending direction of the submarine cable 1. The weight block 61 is generally in the shape of a hollow cylinder; the diameter of the hollow cylinder is slightly larger than that of the submarine cable 1, so that the weight block 61 can be sleeved on the submarine cable 1. Specifically, each weight block 61 is formed by connecting the left weight ring 611 and the right weight ring 612; one end of the left weight ring 611 is connected to one end of the right weight ring 612 through a hinge structure, and the other end of the left weight ring 611 is connected to the other end of the right weight ring 612 via a fixed connection. In addition, a connecting ring 12 is also installed on the weight component 6 to facilitate connection with the alarm component 8.

The arrangement of the weight component 6 enhances the underwater adaptability of the submarine cable 1, improves the buffering performance of the submarine cable 1, and can cope with the shaking or instability of the submarine cable 1 caused by underwater ocean currents.

In another embodiment, the weight block 61 can also be in the shape of a hollow cube, a hollow ellipsoid, a hollow sphere or other shapes.

In one embodiment, the weight block 61 is provided with remote release devices 613; the remote release devices 613 have a locked state in which the other end of the left weight ring 611 is fixedly connected to the other end of the right weight ring 612, and an unlocked state in which the other end of the left weight ring 611 is separated from the other end of the right weight ring 612 by remote control.

One end of the left weight ring 611 and one end of the right weight ring 612 are connected via a hinge, and the other end of the left weight ring 611 and the other end of the right weight ring 612 are provided with remote release devices 613. The remote release devices 613 can be remotely controlled by the staff on the submarine cable laying vessel 2. The remote release devices 613 include two states: a locked state and an unlocked state. When the remote release devices 613 are in the locked state, the left weight ring 611 and the right weight ring 612 are fixedly connected together through a locking mechanism, so as to ensure that the weight block 61 can be fixed at the predetermined position of the submarine cable 1; when the weight component 6 needs to be recovered, the unlocked state of the remote release devices 613 are activated by remote control to trigger the unlocking mechanism, and the left weight ring 611 and the right weight ring 612 are automatically separated, so that the weight block 61 is separated from the submarine cable 1, facilitating the floating and recovery of the submarine cable 1.

After the severe sea conditions return to normal, the early warning and handling system for submarine cable laying will be pulled and recovered by the cable laying machine 5; the weight blocks 61 are released by remote control through the remote release devices 613, so as to prevent accidents when manually removing the weight blocks 61 and ensure personnel safety and the quality of the recovered submarine cable 1.

In one embodiment, each buoyancy component 7 comprises a plurality of buoyancy blocks 71 arranged at intervals along the extending direction of the submarine cable 1; wherein each buoyancy block 71 comprises a left buoyancy ring 711 and a right buoyancy ring 712; one end of the left buoyancy ring 711 is hinged to one end of the right buoyancy ring 712, and the other end of the left buoyancy ring 711 is fixedly connected to the other end of the right buoyancy ring 712.

The buoyancy component 7 comprises a plurality of buoyancy blocks 71; the buoyancy blocks 71 are made of low-density materials such as polyethylene, polyurethane foam and polytetrafluoroethylene, and are arranged at equal intervals along the extending direction of the submarine cable 1. The buoyancy block 71 is generally in the shape of a hollow cube; a hollow cylinder is arranged at the center of the cube; the diameter of the hollow cylinder is slightly larger than that of the submarine cable, so that it can wrap the outer periphery of the submarine cable 1 and be fixed. Each buoyancy block 71 comprises the left buoyancy ring 711 and the right buoyancy ring 712; one end of the left buoyancy ring 711 is connected to one end of the right buoyancy ring 712 through a hinge structure, and the other end of the left buoyancy ring 711 is connected to the other end of the right buoyancy ring 712 through a fixed connection method, so as to ensure that each buoyancy block 71 does not loosen or fall off during the entire laying process of the submarine cable 1. A connecting ring 12 is also installed on the buoyancy component 7 for connection with the alarm component.

In another embodiment, the buoyancy block 71 can also be in the shape of a hollow cylinder, a hollow ellipsoid, a hollow sphere or other shapes.

In one embodiment, the alarm component 8 comprises a housing 81, a distance sensing device 82 and an alarm device 83; wherein the distance sensing device 82 is disposed inside the housing 81, and the alarm device 83 is disposed on the housing 81; the alarm device 83 comprises a signal transmission device 831, a sound-emitting device 832 and a light-emitting device 833; the distance sensing device 82 is electrically connected to the signal transmission device 831, and the signal transmission device 831 is electrically connected to the sound-emitting device 832 and the light-emitting device 833.

The interior of the housing 81 of the alarm component 8 is of a hollow structure; the alarm device 83 is installed on the housing 81, and the distance sensing device 82 is arranged inside the housing 81. The alarm device 83 comprises the signal transmission device 831, the sound-emitting device 832 and the light-emitting device 833; the signal transmission device 831 is in electrical signal connection with the distance sensing device 82, and can receive signals from the distance sensing device 82 and transmit the received signals to the sound-emitting device 832 and the light-emitting device 833.

Further, the distance sensing device 82 is arranged at the inner center of the housing 81, which can monitor the environment around the submarine cable 1 in real time, detect objects near the submarine cable 1, and send detected danger signals to the signal transmission device 831. A radar device and a visual recognition system are arranged in the distance sensing device 82; the radar device can sense in real time whether there are ships or other objects approaching the submarine cable; when a ship, an offshore floating platform or a large foreign object enters the detection range of the distance sensing device 82, the radar device built in the distance sensing device 82 can perform radar sensing on the relevant objects and measure the distance at the same time, generate a corresponding sensing signal, and feed back the sensing distance in real time according to the sensing range of the radar device; the visual recognition system can observe the objects approaching the submarine cable 1; after receiving the signal feedback, the staff can observe the state of the submarine cable 1 in real time through the visual recognition system of the distance sensing device 82, and judge whether the objects will affect the laying of the submarine cable 1 or damage the submarine cable.

The signal transmission device 831 is arranged on the outer wall of the upper surface of the housing, and is mainly used for receiving the signals sent by the distance sensing device 82; the signal transmission device 831 is integrated with an intelligent construction site electronic fence system; the electronic fence system can connect the sound-emitting device 832, the light-emitting device 833 and the distance sensing device 82 through signals to form a multi-alarm system; the ship side, the shore base i.e., the onshore command and control center and the online management system can monitor and coordinate the submarine cable 1 in real time, so as to ensure that the staff can carry out all-round "three-in-one" management and control. When the distance sensing device 82 detects that a ship, an offshore platform or other obstacles are approaching, the electronic fence system can immediately transmit a control signal to the sound-emitting device 832 and the light-emitting device 833, trigger an alarm signal, and feed back the signal collected by the signal transmission device 831 to the staff on the submarine cable laying vessel 2, so that the staff can evaluate and handle the problems occurring during the laying process of the submarine cable 1. At the same time, the operation signals of the staff will be fed back to the sound-emitting device 832 and the light-emitting device 833 through the intelligent construction site electronic fence system, so as to quickly handle emergency accidents.

When the distance sensing device 82 detects that there is a potential danger around the submarine cable 1, the light-emitting device 833 switches to a flashing state to warn the approaching ships; especially when the visibility is poor at night, the flashing of the light-emitting device 833 can effectively warn the ships around the submarine cable 1. The light-emitting device 833 is located on the outer wall of the upper surface of the housing 81, and is used for emitting visible light signals to improve the visual visibility of the position of the submarine cable 1 and remind the positions of ships and other offshore platforms. The sound-emitting device 832 is also arranged on the outer wall of the upper surface of the housing 81 and is used for emitting an alarm sound. The sound-emitting device can emit a sufficiently loud alarm sound when the distance sensing device 82 detects that there is a potential danger in the surrounding environment, so as to give a voice warning to the staff on nearby ships or platforms.

A backup battery and a positioning device are also arranged inside the alarm component 8, which enhances the emergency response capability of the alarm component 8. The backup battery can provide necessary power supply for the alarm component 8, and the power of the backup battery can ensure that the alarm component 8 can be used for more than 24 hours, so as to ensure that it can operate for a long time and emit alarm signals in case of emergency. The positioning device is equipped with Beidou, GPS and other positioning systems, which can monitor the position information of the alarm component 8 in real time. If the alarm component 8 is disconnected accidentally or lost for other reasons, the staff can quickly locate the position of the alarm component 8 through the positioning system and retrieve it. When the alarm component 8 is in an abnormal state, such as being impacted, squeezed or abnormally disconnected, the alarm device 83 will also feed back the signal to the staff on the submarine cable laying vessel 2 through the signal transmission device 831, reminding the staff to check the alarm component 8 in time and check the cause of the fault.

In one embodiment, the early warning and handling system for submarine cable laying further comprises a connecting component 10; wherein the connecting component 10 comprises an elastic connecting rope 101 and a reel 102; one end of the elastic connecting rope 101 is connected to the alarm components 8, the other end of the elastic connecting rope 101 is connected to the weight components 6 or the buoyancy components 7, and the reel 102 is disposed on the elastic connecting rope 101.

The connecting component 10 comprises the elastic connecting rope 101 and the reel 102; one end of the elastic connecting rope 101 is connected to the connecting ring 12 on the alarm components 8, and the other end of the elastic connecting rope 101 is connected to the connecting ring 12 on the weight components 6 or the buoyancy components 7. The reel 102 is installed on the elastic connecting rope 101 and is used for winding and unwinding the elastic connecting rope 101. When the connection distances between the alarm components 8 and the weight components 6 or the buoyancy components 7 need to be adjusted, the reel 102 can effectively retract or release the elastic connecting rope 101 to meet the distance requirements under different sea conditions.

The elastic connecting rope 101 can ensure that the alarm components 8 can freely expand and contract with the changes of the submarine cable 1 during the laying process of the submarine cable 1, and ensure that the alarm components 8 can maintain stable heights and positions when the seawater fluctuates and the submarine cable 1 displaces; the reel 102 is used to provide a flexible winding and unwinding function for the elastic connecting rope 101, and the staff can adjust the positions and distances of the alarm components 8 according to actual needs, so as to ensure that the alarm components 8 always maintain a reasonable connection and position with the submarine cable 1.

In one embodiment, the early warning and handling system for submarine cable laying further comprises a submarine cable bending limiter 11; the submarine cable bending limiter 11 is disposed on a part of the submarine cable 1 close to the cable laying machine 5.

The submarine cable bending limiter 11 is arranged in the sea water and close to the stern of the submarine cable laying vessel 2; the submarine cable 1 passes through the submarine cable bending limiter 11 through the cable laying machine 5, and enters the sea water from the inside of the submarine cable bending limiter 11 for laying the submarine cable 1. The submarine cable bending limiter 11 controls the bending radius of the submarine cable 1 through a physical limitation method, provides necessary support and protection for the submarine cable 1, and ensures that the submarine cable 1 is in a safe bending range in the area close to the cable laying machine 5. The submarine cable 1 is pulled and released by the cable laying machine 5 to enter the sea water; if the bending radius of the submarine cable 1 is too small, the fiber core of the submarine cable 1 may be broken under the action of sea currents, thereby affecting the transmission performance of the submarine cable 1; the submarine cable bending limiter 11 can ensure that the submarine cable 1 does not suffer structural damage due to excessive bending during the laying process.

According to the embodiment of the present invention, in the second aspect, a method for using an early warning and handling system for submarine cable is also provided, which is applied to the early warning and handling system for submarine cable laying, and the using method comprises the following steps:
Step 1: When the sea condition suddenly changes, alternately install buoyancy components 7 and weight components 6 on the submarine cable 1, connect an alarm component 8 when installing each group of the buoyancy components 7 or each group of the weight component 6s, and throw a section of the submarine cable 1 with a length greater than its bending radius into the sea after installing each buoyancy component 7 or each weight component 6;
When the sea condition changes drastically during the laying process of the submarine cable 1, such as extreme sea conditions such as strong waves, changes in ocean currents, sudden storms or typhoons, the staffs need to alternately install the buoyancy components 7 and weight components 6 on the submarine cable 1; the buoyancy components 7 or weight components 6 can be installed first, and the number of the buoyancy components 7 or weight components 6 can also be adjusted adaptively. In this embodiment, two groups of the buoyancy components 7 and one group of the weight components 6 are provided, and the buoyancy components 7 are installed first, followed by the weight components 6. After installing the first group of buoyancy components 7, a group of alarm components 8 are connected to the first group of buoyancy components 7; after the installation is completed, the staffs need to throw a section of the submarine cable 1 into the sea, and the length of the thrown submarine cable 1 is greater than or equal to 2.5 times the bending radius of the submarine cable 1. Then, the first group of weight components 6 are installed, and a group of alarm components 8 are connected to the first group of weight components 6; after the installation is completed, a section of the submarine cable 1 is thrown into the sea again. The installation of the two groups of buoyancy components 7, one group of weight components 6 and three groups of alarm components 8 as well as the throwing of the submarine cable 1 are gradually completed according to this step. In other embodiments, the buoyancy components 7, weight components 6 and alarm components 8 are installed in this way; of course, the weight components 6 can also be installed first, followed by the buoyancy components 7.

Through the alternate arrangement of the weight components 6 and buoyancy components 7, the submarine cable 1 can present a structure with multiple wave crests and wave troughs in water, forming a "wavy" state, which prevents the submarine cable 1 from shifting or drifting over a large range due to ocean currents, and ensures the stability of the submarine cable 1 in sea water; the suspended length of the submarine cable 1 reaches "1.5 wave cycles", that is, the buoyancy and gravity of the submarine cable 1 in water are balanced, ensuring that the submarine cable 1 can maintain a stable suspended state under different sea conditions, ensuring that the submarine cable 1 has a good dynamic buffering effect when suspended in water, avoiding excessive sinking or floating out of the water surface, and thus reducing the damage risk caused by unstable positions. The alarm components can monitor the changes of the surrounding environment in real time during the submarine cable laying process; once a ship, an offshore platform or other obstacles are detected to be close to the submarine cable, the alarm components will issue an alarm through the sound-emitting device and the light-emitting device, reminding the staff of the surrounding ships or platforms to take evasive measures to ensure the safety of the submarine cable.

Step 2: Install a submarine cable bending limiter 11 on a part of the submarine cable 1 close to a cable laying machine 5.

After the submarine cable 1 is thrown, the submarine cable bending limiter 11 also needs to be installed. The submarine cable bending limiter 11 is also installed at the position of the cable laying machine 5 close to the stern. The submarine cable 1 enters the sea water through the submarine cable bending limiter 11, ensuring that the submarine cable 1 always maintains a reasonable bending radius during the laying process, and preventing the submarine cable 1 from being excessively bent during the cable laying process.

In one embodiment, when the sea condition returns to normal, release the weight components 6 through the remote release devices 613, and then pull the submarine cable 1 to wind it onto the cable reel 3 through the cable laying machine 5.

When the sea condition returns to normal, the weight components 6, the buoyancy components 7 and the alarm components 8 on the submarine cable 1 need to be recovered. The cable laying machine 5 pulls the submarine cable 1 to recover it into the cable reel 3; during the recovery process of the submarine cable 1, the weight components 6, the buoyancy components 7 and the alarm components 8 on the submarine cable 1 are removed and recovered at the same time. Considering that the weight component 6 is relatively heavy, if the weight components 6 cannot be recovered due to a system failure during the recovery process, the fixed connection of the weight components 6 can be released through the remote release devices 613, so that the weight components 6 are separated from the submarine cable 1; the cable laying machine 5 pulls the submarine cable 1 to safely wind the submarine cable 1 with the weight components 6 released onto the cable reel 3, completing the recovery operation. At the same time, releasing the weight components 6 can also ensure that the submarine cable 1 is not pulled or damaged by the weight components 6 when being recovered, and avoid unnecessary stress or deformation of the submarine cable 1 during the recovery process.

Although embodiments of the present invention have been described with reference to the accompanying drawings, various modifications and variations can be made by those skilled in the art without departing from the spirit and scope of the present invention, and such modifications and variations all fall within the scope defined by the appended claims.

## Claims

1. An early warning and handling system for submarine cable laying, disposed on a submarine cable (1), wherein one end of the submarine cable (1) is connected to a cable reel (3) at a stern of a submarine cable laying vessel (2), the other end of the submarine cable (1) is laid on a seabed (4), and the submarine cable (1) is laid by a cable laying machine (5) on the submarine cable laying vessel (2), **characterized by** comprising weight components (6) and buoyancy components (7) alternately arranged at intervals on a part of the submarine cable (1) located in the sea, and each group of the weight components (6) and each group of the buoyancy components (7) is connected to an alarm component (8).

2. The early warning and handling system for submarine cable laying according to claim 1, **characterized by** comprising one group of the weight components (6) and two groups of the buoyancy components (7), wherein the alarm components (8) connected to the weight components (6) are located at the same height as the two buoyancy components (7), and the alarm components (8) connected to the buoyancy components (7) float on sea surface (9).

3. The early warning and handling system for submarine cable laying according to claim 1, **characterized in that** each of the weight components (6) comprises a plurality of weight blocks (61) arranged at intervals along a extending direction of the submarine cable (1); wherein each of the weight blocks (61) comprises a left weight ring (611) and a right weight ring (612); one end of the left weight ring (611) is hinged to one end of the right weight ring (612), and the other end of the left weight ring (611) is fixedly connected to the other end of the right weight ring (612).

4. The early warning and handling system for submarine cable laying according to claim 3, **characterized in that** each of the weight blocks (61) is provided with remote release devices (613); the remote release devices (613) have a locked state in which the other end of the left weight ring (611) is fixedly connected to the other end of the right weight ring (612), and an unlocked state in which the other end of the left weight ring (611) is separated from the other end of the right weight ring (612) by remote control.

5. The early warning and handling system for submarine cable laying according to claim 1, **characterized in that** each of the buoyancy components (7) comprises a plurality of buoyancy blocks (71) arranged at intervals along a extending direction of the submarine cable (1); wherein each of the buoyancy blocks (71) comprises a left buoyancy ring (711) and a right buoyancy ring (712); one end of the left buoyancy ring (711) is hinged to one end of the right buoyancy ring (712), and the other end of the left buoyancy ring (711) is fixedly connected to the other end of the right buoyancy ring (712).

6. The early warning and handling system for submarine cable laying according to claim 1, **characterized in that** the alarm component (8) comprises a housing (81), a distance sensing device (82) and an alarm device (83); wherein the distance sensing device (82) is disposed inside the housing (81), and the alarm device (83) is disposed on the housing (81); the alarm device (83) comprises a signal transmission device (831), a sound-emitting device (832) and a light-emitting device (833); the distance sensing device (82) is electrically connected to the signal transmission device (831), and the signal transmission device (831) is electrically connected to the sound-emitting device (832) and the light-emitting device (833).

7. The early warning and handling system for submarine cable laying according to claim 1, **characterized by** further comprising a connecting component (10); wherein the connecting component (10) comprises an elastic connecting rope (101) and a reel (102); one end of the elastic connecting rope (101) is connected to the alarm component (8), the other end of the elastic connecting rope (101) is connected to one of the weight components (6) or one of the buoyancy components (7), and the reel (102) is disposed on the elastic connecting rope (101).

8. The early warning and handling system for submarine cable laying according to any one of claims 1 to 7, **characterized by** further comprising a submarine cable bending limiter (11); the submarine cable bending limiter (11) is disposed on a part of the submarine cable (1) close to the cable laying machine (5).

9. A method for using an early warning and handling system for submarine cable, applied to the early warning and handling system for submarine cable laying according to any one of claims 1 to 8, **characterized by** comprising the following steps:
when sea conditions suddenly change, alternately install buoyancy components (7) and weight components (6) on the submarine cable (1), connect an alarm component (8) when installing each group of the buoyancy components (7) or each group of the weight components (6), and throw a section of the submarine cable (1) with a length greater than its own bending radius into the sea after installing each group of the buoyancy components (7) or each group of the weight components (6); and
install a submarine cable bending limiter (11) on the part of the submarine cable (1) close to the cable laying machine (5).

10. The method for using the early warning and handling system for submarine cable according to claim 9, **characterized in that** when the sea conditions return to normal, release the weight components (6) through remote release devices (613), and then pull the submarine cable (1) to wind it onto the cable reel (3) through the cable laying machine (5).
